# EUROPÄISCHE PATENTSCHRIFT

(11) **EP 2 021 206 B1**
(45) Veröffentlichungstag und Bekanntmachung des Hinweises auf die Patenterteilung: **19.09.2018**
(21) Anmeldenummer: 06753248.1
(22) Anmeldetag: 31.05.2006
(51) Int. Cl.: B60L 13/03, B60L 13/10, H02H 7/00

(54) **SICHERE ANTRIEBSABSCHALTUNG**
RELIABLE DRIVE CUT OFF DEVICE
DÉCONNEXION SÉCURISÉE D'UN ENTRAÎNEMENT

(43) Veröffentlichungstag der Anmeldung: 11.02.2009
(73) Patentinhaber: Siemens Aktiengesellschaft, 80333 München (DE)
(72) Erfinder: ENGEL, Markus, 90469 Nürnberg (DE); LIESKE, Jürgen, 91350 Gremsdorf (DE)
(86) Internationale Anmeldenummer: PCT/DE2006/000973
(87) Internationale Veröffentlichungsnummer: WO 2007/137540

(56) Entgegenhaltungen:
- EP-A2- 1 050 427
- WO-A-99/42320
- DE-A1- 10 139 318
- BLANK K ET AL: "ANTRIEB UND ENERGIEVERSORGUNG DES TRANSRAPID PROPULSION SYSTEM AND POWER SUPPLY FOR THE TRANSRAPID" ZEVRAIL - GLASERS ANNALEN, GEORG SIEMENS VERLAG, BERLIN, DE, Bd. 127, Oktober 2003 (2003-10), Seiten 70-82,84, XP001172194 ISSN: 1618-8330
- MATERNE R-T ET AL: "DIE FAHRWEGSEITIGE SICHERUNG UND STEUERUNG DES TRANSRAPID" SIGNAL + DRAHT, TELZLAFF VERLAG GMBH. DARMSTADT, DE, Bd. 89, Nr. 7/8, Juli 1997 (1997-07), Seiten 23-27, XP000779781 ISSN: 0037-4997

## Beschreibung

Die Erfindung betrifft eine Schutzvorrichtung zum sicheren Trennen eines Antriebsbereichs einer Energieversorgung eines spurgeführten Fahrzeugs, wobei der Antriebsbereich über wenigstens einen Antriebsbereichsschalter mit der Energieversorgung koppelbar ist und in einer Kette aneinander gereihte Statorabschnitte umfasst, die jeweils mittels eines Statorabschnittsschalters mit einer Antriebsbereichsversorgungsleitung verbindbar sind, und wobei die Schutzvorrichtung eine Steuerungseinheit zum Öffnen wenigstens eines Schalters im Fehlerfall aufweist.

Die Erfindung betrifft ferner eine Vorrichtung zum Antreiben eines spurgebundenen Fahrzeugs mit in einer Kette aneinander gereihten Antriebsbereichen, wobei jeder Antriebsbereich über wenigstens einen Antriebsbereichsschalter mit der Energieversorgung koppelbar ist und in einer Kette aneinander gereihte Statorabschnitte umfasst, die jeweils mittels eines Statorabschnittsschalters mit einer Antriebsbereichsversorgungsleitung verbindbar sind.

Die Erfindung betrifft ferner ein Verfahren zum Trennen eines Antriebsbereichs eines spurgebundenen Fahrzeugs von einer durch wenigstens einen Umrichter bereitgestellte Energieversorgung.

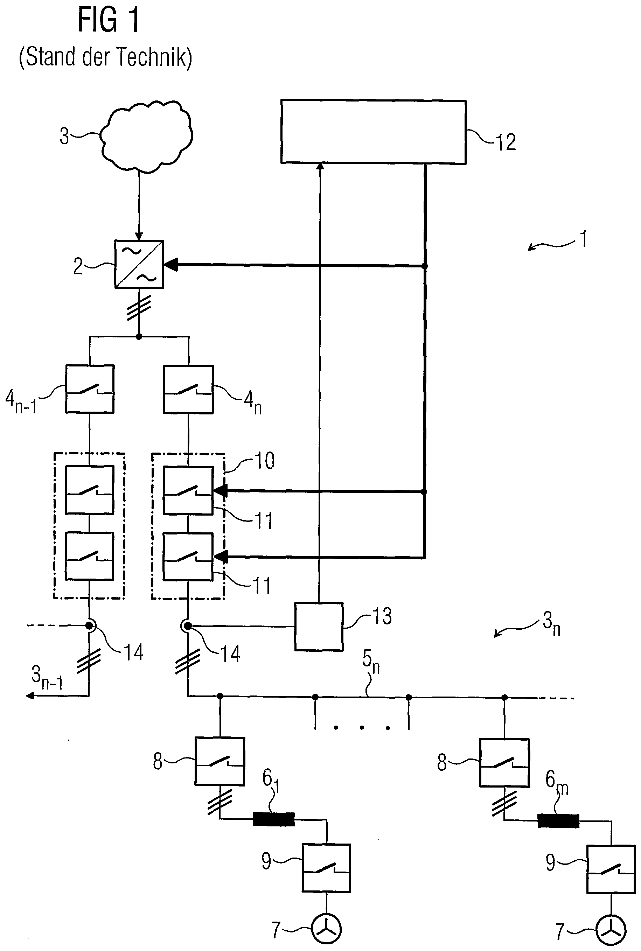

Eine solche Schutzvorrichtung, eine solche Vorrichtung und ein solches Verfahren sind aus dem landläufigen Stand der Technik bereits bekannt. So verdeutlicht beispielsweise Figur 1 eine vorbekannte Vorrichtung zum Antrieb eines Magnetschwebefahrzeuges.

Die bekannte Vorrichtung 1 gemäß Figur 1 umfasst einen Umrichter 2, der mit einem Energie einspeisenden dreiphasigen Versorgungsnetz 3 verbunden ist. Der Antrieb des Magnetschwebefahrzeugs ist in fahrwegbezogene Antriebsbereiche 3₁, 3₂ ... 3ₙ unterteilt, die kettenartig aneinander gereiht sind. Dabei ist jeder Antriebsbereich 3ₙ über einen Antriebsbereichsschalter 4ₙ₋₁ beziehungsweise 4ₙ einem Antriebsbereich 3ₙ₋₁ beziehungsweise 3ₙ zuschaltbar, so dass eine Antriebsbereichsversorgungsleitung 5ₙ des jeweiligen Antriebsbereichs 3ₙ mit Energie versorgbar ist. Jeder Antriebsbereich 3ₙ weist wiederum ebenfalls in einer Kette hintereinander angeordnete Langstatorabschnitte 6₁, 6₂ ...6ₘ auf, die ebenfalls dreiphasig ausgebildet und an einem Ende zu einem geerdeten Sternpunkt 7 verschaltet sind. Zum Zuschalten jeder Langstatorwicklung 6₁, 6₂ ...6ₘ zur Antriebsbereichsleitung 5ₙ dienen so genannte Statorabschnittsschalter 8. Ferner sind Sternpunktschalter 9 vorgesehen. Ein Stromfluss über den Langstatorabschnitt 6₁, 6₂ ... 6ₘ ist nur möglich, wenn sowohl der jeweils zugeordnete Statorabschnittsschalter 8 als auch der jeweils zugeordnete Sternpunktschalter 9 geschlossen sind. Das Öffnen und Schließen des Antriebsbereichsschalters 4ₙ sowie des Langstatoreingangsschalters 8 beziehungsweise des Sterpunkschalters 9 erfolgt fahrzeugsynchron. Dies bedeutet, dass nur der Antriebsbereich 3ₙ beziehungsweise der Langstatorabschnitt 6ₘ bestromt wird, in dem sich das Fahrzeug gerade befindet.

Jeder Antriebsbereich 3ₙ kann von einem einzigen Umrichter 2 gespeist werden, wie in Figur 1 gezeigt ist. Abweichend hiervon ist jedoch auch eine Doppelspeisung möglich, wobei jeder Antriebsbereich 3ₙ von zwei Umrichtern versorgt wird.

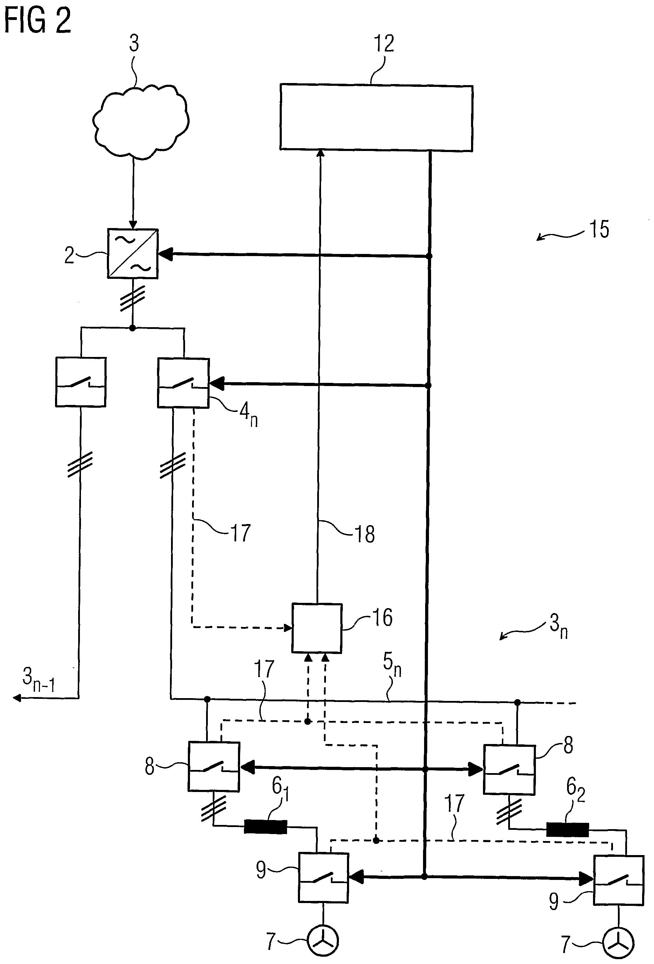

Um eine Personengefährdung so weit wie möglich zu vermeiden, sind an die sichere Abschaltung der Energieversorgung hohe Sicherheitsanforderungen geknüpft. Gemäß dem Stand der Technik ist eine so genannte sichere Antriebsabschaltung 10 vorgesehen, die aus zwei in Reihe geschalteten Leistungsschaltern 11 besteht. Die sichere Antriebsabschaltung 10 ist dem jeweiligen Antriebsbereichsschalter 4ₙ nachgeschaltet, so dass der in Figur 2 gezeigte Umrichter 2 nach einem Fehler im Antriebsbereich 3ₙ noch für die Energieversorgung eines fehlerfreien Antriebsbereichs, wie beispielsweise des Antriebsbereichs 3ₙ₋₁, eingesetzt werden kann. Zur Regelung der sicheren Antriebsabschaltung ist eine Steuereinheit 12 vorgesehen, die zweckmäßigerweise in einer von der Steuerung des Umrichters 2 unabhängigen Betriebsleittechnik integriert ist. Zur sicheren Antriebsabschaltung greift die Steuerungseinheit 12 in den Energiefluss des Antriebes ein. In einem ersten Schritt wird der Energiefluss des oder der einspeisenden Umrichter 2 unterbrochen. In einem zweiten Schritt erfolgt die galvanische Trennung der Umrichter 2 von dem Antriebsbereich 3ₙ durch die sichere Antriebsabschaltung 10, wobei eine Kontrolleinrichtung 13 der Steuerungseinheit 12 über zweckmäßige Kommunikationsleitungen mitteilt, ob noch ein Strom im Antriebsbereich 3ₙ fließt oder eine sichere Antriebsabschaltung vorliegt. Aus diesem Grunde ist die Kontrolleinheit 13 mit einem zweckmäßigen Stromwandler 14 verbunden, welcher der sicheren Antriebsabschaltung 10 nachgeschaltet ist. Anschließend kann der Energiefluss durch den Umrichter durch die Steuerungseinheit 12 wieder freigegeben werden, so dass der Umrichter 2 für die Energieeinspeisung beispielsweise in den fehlerfreien Antriebsbereich 3ₙ₋₁ wieder zur Verfügung steht. Die Zuschaltung des Antriebsbereichs 3ₙ kann erst nach der Beseitigung des Fehlers erfolgen. Die vorbekannte Antriebsabschaltung gemäß Figur 1 ist ausgesprochen sicher und lässt auch eine flexible Zuordnung der Umrichter zu den jeweiligen Antriebsbereichen zu. Der zusätzliche Einsatz von zwei in Reihe geschalteten mehrpoligen Leistungsschaltern 11 ist jedoch kostenintensiv.

Aus der WO 2006/032630 A1 ist eine Vorrichtung zur Energieversorgung eines Motors einer Magnetschwebebahn bekannt. Die besagte Vorrichtung verzichtet auf eine zusätzliche sichere Antriebsabschaltung in Form von zwei in Reihe geschalteten Leistungsschaltern. Stattdessen greift die Steuerungseinrichtung auf einen Antriebsbereichsschalter zu, der in Richtung des Energieflusses dem Umrichter nachgeschaltet ist. Um den notwendigen Sicherheitsanforderung gerecht zu werden, wird im Fehlerfall darüber hinaus jedoch auch ein Umrichtereingangsschalter betätigt, wobei ein Kurzschließer gleichzeitig für eine Entladung eines Gleichspannungszwischenkreises sorgt, der den Gleich- und Wechselrichter des Umrichters miteinander verbindet. Dieser vorbekannten Vorrichtung haftet der Nachteil an, dass der Umrichter durch das Öffnen des Eingangsschalters für die Energieversorgung anderer fehlerfreier Antriebsbereiche nicht mehr zur Verfügung steht.

Aus der DE 101 39 318 A1 ist ein Verfahren zur Fehlererkennung in einem elektrischen Strahlennetz bekannt.

Aufgabe der Erfindung ist es daher, eine Schutzvorrichtung, eine Vorrichtung und ein Verfahren der eingangs genannten Art bereitzustellen, die sowohl kostengünstig sind als auch weiterhin eine flexible Zuordnung der Energieversorgung zu den Antriebsbereichen ermöglichen.

Die Erfindung löst diese Aufgabe ausgehend von der eingangs genannten Schutzvorrichtung dadurch, dass die Steuerungseinheit zum Öffnen sämtlicher Statorabschnittsschalter und des/der Antriebsbereichsschalter im Fehlerfall eingerichtet ist.

Die Erfindung löst diese Aufgabe ausgehend von der eingangs genannten Vorrichtung dadurch, dass diese eine solche Schutzvorrichtung aufweist.

Die Erfindung löst die Aufgabe ferner durch ein Verfahren nach Anspruch 8, bei dem eine Steuerungseinheit anhand von Messwerten und einer in ihr implementierten Logik einen Fehlerfall erkennt, die Steuerungseinheit anschließend in die Regelung der Umrichter eingreift und die Energieversorgung durch jeden Umrichter unterbricht, anschließend Statorabschnittsschalter, die jeweils einen von in einer Kette aneinander gereihten Statorabschnitten mit einer Antriebsbereichsversorgungsleitung verbinden, und jeden Antriebsbereichsschalter öffnet, der die Antriebsbereichsversorgungsleitung mit einem dem Antriebsbereichsschalter zugeordneten Umrichter verbindet, und bei dem eine Sammelanzeigeeinrichtung die Schaltstellung der Statorabschnittsschalter und der Antriebsbereichsschalter an die Steuerungseinheit übermittelt, wobei die Steuerungseinheit bei geöffneten Statorabschnittsschaltern und geöffneten Antriebsbereichsschaltern die Energieerzeugung durch den oder die Umrichter zulässt.

Die Erfindung beruht auf der Idee, dass die Energieversorgung auch allein mittels der ohnehin vorhandenen Schalter eines Magnetbahnschwebesystems sicher abgeschaltet werden kann. Dabei ist es keineswegs erforderlich, den Umrichter durch einen dem Umrichter vorgeschalteten Eingangsschalter galvanisch von der Energieversorgung zu trennen. Erfindungsgemäß ist es vollkommen ausreichend im Fehlerfall alle Statorabschnittsschalter sowie den und/oder die Antriebsbereichsschalter in ihre jeweilige Trennstellung zu überführen. Die dadurch bereitgestellte Sicherheit der galvanischen Trennung des Antriebsbereichs von der Versorgungsenergie ist auch im Hinblick auf die gestellten hohen Anforderungen vollkommen ausreichend. Die Statorabschnittsschalter sowie die Antriebsbereichsschalter sind ohnehin vorhanden, so dass diesbezüglich keine zusätzlichen Kosten entstehen. Lediglich die Ansteuerung der Schalter durch die Steuerungseinheit ist durch zweckmäßige Kommunikations- und Zugriffsleitungen sicherzustellen. Die hierbei entstehenden Kosten bleiben jedoch begrenzt.

Erfindungsgemäß ist wenigstens eine Sammelanzeigeeinrichtung vorgesehen, die mit jedem Statorabschnittsschalter und/oder wenigstens einem der Abschnittsbereichsschalter sowie der Steuerungseinheit verbunden und zum Anzeigen der Schaltstellung der mit ihr verbundenen Schalter eingerichtet ist. Gemäß dieser vorteilhaften Weiterentwicklung ist die aus dem Stand der Technik gemäß Figur 1 bekannte Kontrolleinheit durch eine Sammelanzeigeeinrichtung ersetzt. Die Sammelanzeigeeinrichtung dient zur Anzeige der Schaltstellung sämtlicher an der sicheren Antriebsabschaltung beteiligten Schalter. Diese umfassen einen Antriebsbereichsschalter oder im Falle von Doppel- oder Mehrfacheinspeisung mehrere Antriebsbereichsschalter sowie sämtliche Statorabschnittsschalter und gegebenenfalls weitere Schalter, wie nachfolgend noch genauer ausgeführt ist. Erst wenn der Steuerungseinheit von der Sammelanzeigeneinrichtung angezeigt wird, dass sich sämtliche Schalter der sicheren Antriebsabschaltung in ihrer Trennstellung befinden, erlaubt die Steuerungseinheit einen Energiefluss über den beziehungsweise die beteiligten Umrichter, so dass diese für andere Antriebsbereiche wieder zur Verfügung stehen.

Gemäß einer weiteren Ausgestaltung der erfindungsgemäßen Schutzvorrichtung umfasst jeder Statorabschnitt eine mehrphasige Statorwicklung, die zu einem Sternpunkt verschaltet ist. Von den Phasen der Wicklung wird beim üblichen Magnetschwebesystem ein magnetisches Wanderfeld erzeugt, das ein im Statorabschnitt befindliches Magnetschwebefahrzeug mit sich reißt. Dabei bestimmt die Frequenz des Wechselstromes die Geschwindigkeit des Fahrzeuges.

Gemäß einer weiteren Ausgestaltung der Schutzvorrichtung sind Sternpunktschalter vorgesehen, die jeweils in Reihe zu einem Statorabschnittsschalter geschaltet sind, wobei jeder Statorabschnitt zwischen einem Sternpunktschalter und einem Statorabschnittsschalter angeordnet ist. Wie bereits oben im Zusammenhang mit dem Stand der Technik erläutert wurde, erhöht der Sternpunktschalter die Sicherheit im Statorabschnitt, da ein Stromfluss über den Statorabschnitt und somit ein Antrieb eines Magnetschwebefahrzeugs nur dann möglich ist, wenn sowohl der Statorabschnittsschalter als auch der Sternpunktschalter sich in ihrer Kontaktstellung befinden. Ein möglicher Sternpunkt ist dem Sternpunktschalter in Richtung des Energieflusses zweckmäßigerweise nachgeschaltet.

Gemäß einer diesbezüglich vorteilhaften Weiterentwicklung ist die Steuerungseinheit zum Öffnen der Sternpunktschalter im Fehlerfall eingerichtet. Mit anderen Worten werden die üblicherweise vorhandenen Sternpunktschalter in das erfinderische Konzept der sicheren Antriebsabschaltungen einbezogen. Dazu greift die Steuerungseinheit auch auf die Steuereingänge der Sternpunktschalter zu und überführt diese in ihre Trennstellung, so dass die Sicherheit für das Gesamtsystem noch weiter erhöht ist.

Gemäß einer vorteilhaften Weiterentwicklung der eingangs genannten Vorrichtung ist jeder Antriebsbereich mit Hilfe eines Antriebsbereichsschalters mit einem Energie einspeisenden Umrichter verbunden. Die Antriebsbereiche werden beispielsweise von einem einzigen Umrichter gespeist. Abweichend hiervon ist jedoch eine Doppelspeisung möglich, bei der jeder Antriebsbereich über einen weiteren Antriebsbereichsschalter mit einem weiteren Umrichter verbunden ist. Einfach- und Doppelspeisungen eines Antriebsbereichs sind dem Fachmann als solche bekannt, so dass an dieser Stelle hierauf nicht eingegangen zu werden braucht. Einfach- und Doppelspeisungen benötigen nur eine geringfügige Änderung des erfindungsgemäßen Schutzkonzeptes, in dem Sinne, dass beispielsweise zwei Sammelanzeigeeinrichtungen vorgesehen sind, die jeweils mit allen Statorabschnittsschaltern und gegebenenfalls allen Sternpunktschaltern verbunden sind. Jede Sammelanzeigeeinrichtung ist hingegen mit nur einem Antriebsbereichsschalter verbunden. Selbstverständlich ist es auch möglich, dass selbst bei Doppeleinspeisung für jeden Antriebsbereich nur eine Sammelanzeigeeinrichtung vorgesehen ist, die mit allen Schaltern der sicheren Antriebsabschaltung, also auch allen Antriebsbereichsschaltern, verbunden ist.

Gemäß einer vorteilhaften Ausgestaltung des Verfahrens ermöglicht die Steuereinheit nach Beseitigung des Fehlerfalls das Schließen der Antriebsbereichsschalter und der Statorabschnittsschalter und im Bedarfsfall der Sternpunktschalter, so dass der Normalbetrieb des Magnetschwebefahrzeugsystems wieder aufgenommen werden kann.

Bei der Steuerungseinheit handelt es sich im Rahmen der Erfindung beispielsweise um einen Teil der vom eigentlichen Antrieb unabhängigen Betriebsleittechnik, wobei die Betriebsleittechnik der Motor- und Umrichtersteuerung übergeordnet ist und auf diese Weise auf die Umrichter einwirken kann.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Vorrichtung zum Antrieb eines spurgebundenen Fahrzeugs gemäß dem Stand der Technik,
- Figur 2: ein Ausführungsbeispiel einer erfindungsgemäßen Vorrichtung zum Antrieb eines spurgeführten Fahrzeugs und
- Figur 3: ein weiteres Ausführungsbeispiel einer erfindungsgemäßen Vorrichtung zum Antrieb eines spurgebundenen Fahrzeuges zeigen.

Figur 1 zeigt eine Vorrichtung zum Antrieb eines spurgebundenen Fahrzeugs gemäß dem Stand der Technik, die bereits zuvor detailliert beschrieben wurde.

Figur 2 zeigt ein Ausführungsbeispiel einer erfindungsgemäßen Vorrichtung 15 zum Antreiben eines spurgebundenen Fahrzeugs. Die Vorrichtung weist in einer Kette aneinander gereihte Antriebsbereiche 3₁, 3₂, ... 3ₙ auf, wobei in Figur 2 lediglich die Antriebsbereiche 3ₙ₋₁ und 3ₙ gezeigt sind. Jeder Antriebsbereich 3ₙ verfügt über eine dreiphasige Antriebsbereichsversorgungsleitung, die hier als einfaches dreiphasiges Streckenkabel 5ₙ realisiert ist. Jedes Streckenkabel 5ₙ ist über einen Antriebsbereichsschalter 4ₙ mit einem Energie einspeisenden Umrichter 2 verbunden, der von einem Versorgungsnetz 3 mit Energie versorgt wird. Jeder Antriebsbereich 3ₙ ist ferner in Statorabschnitte 6₁, 6₂ bis 6ₘ unterteilt, von denen in Figur 1 lediglich die Statorabschnitte 6₁ und 6₂ gezeigt sind. Wie gemäß dem Stand der Technik ist jede Statorwicklung 6₁ beziehungsweise 6₂ zwischen einem Statorabschnittsschalter 8 und einem Sternpunktschalter 9 angeordnet, wobei jeder Statorabschnitt 6ₘ als mehrphasige Wicklung ausgestaltet und zu einem Sternpunkt 7 verschaltet ist. Im Gegensatz zum gezeigten Stand der Technik ist eine sichere Antriebsabschaltung in Form von zwei in Reihe zueinander geschalteten zusätzlichen Leistungsschaltern im Rahmen der Erfindung nicht mehr vorgesehen. Zur sicheren Antriebsabschaltung greift eine Steuerungseinheit 12 vielmehr auf sämtliche Statorabschnittsschalter 8 sowie sämtliche Sternpunktschalter 9 eines fehlerbehafteten Antriebsbereiches 3ₙ zu. Zum Zugriff dienen als solche bekannte Kommunikations- und Verbindungsleitungen, so dass an dieser Stelle hierauf nicht detailliert eingegangen zu werden braucht.

Darüber hinaus ist die Steuerungseinrichtung 12 auch zum Öffnen des Antriebsbereichschalters 4ₙ eingerichtet. Eine Sammelanzeigeneinrichtung 16 ist zur Anzeige der Schaltstellung sämtlicher Schalter vorgesehen, die an der sicheren Antriebsabschaltung beteiligt sind. Dazu ist die Sammelanzeigeeinrichtung 16 über Verbindungsleitungen 17, die gestrichelt dargestellt sind, mit sämtlichen Statorabschnittsschaltern 8 sowie mit sämtlichen Sternpunktschaltern 9 einerseits und mit dem Antriebsbereichsschalter 4ₙ andererseits verbunden.

Im Fehlerfall greift die Steuerungseinheit 12, beispielsweise ein Teilprogramm der Betriebsleittechnik, die unabhängig von der Motor- und Umrichtersteuerung ist, auf den Umrichter 2 zu und unterbricht durch zweckmäßige Steuerungsbefehle für die Umrichterregelung den Energiefluss über den Umrichter 2. Anschließend greift die Steuerungseinheit 12 auf den Antriebsbereichsschalter 4ₙ sowie alle Statorabschnittsschalter 8 und alle Sternpunktschalter 9 zu. Sobald die Sammelanzeigeeinrichtung 16 der Steuerungseinheit 12 über die Kommunikationsleitung 18 mitteilt, dass sich sämtliche Schalter 4ₙ, 8, 9 in ihrer Trennstellung befinden, erlaubt die Steuerungseinheit 12 das Bereitstellen von Energie durch den Umrichter 2, der darauf hin für den fehlerfreien Antriebsbereich 3ₙ₋₁ wieder zur Verfügung steht.

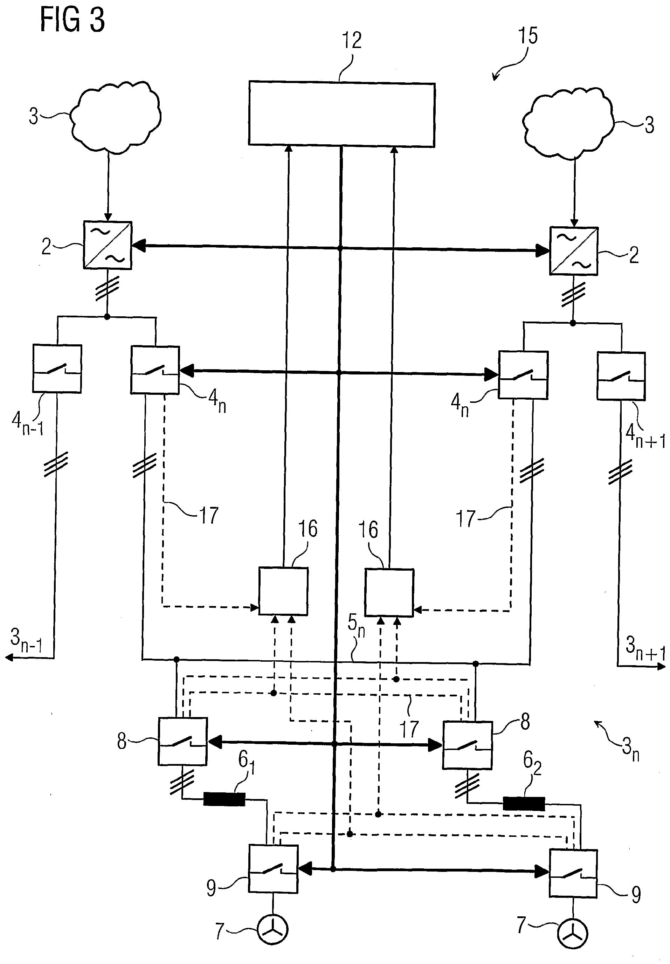

Figur 3 zeigt ein weiteres Ausführungsbeispiel der erfindungsgemäßen Vorrichtung 15. Im Gegensatz zu dem in Figur 2 gezeigten Ausführungsbeispiel weist bei der Vorrichtung gemäß Figur 3 jeder Antriebsbereich 3₁, 3₂ ... 3ₙ zwei Antriebsbereichsschalter 4ₙ auf, so dass jeder Antriebsbereich 3₁, 3₂ ... 3ₙ von zwei Umrichtern gleichzeitig mit Energie versorgt werden kann. Der Stromfluss in der Antriebsbereichsversorgungsleitung 5ₙ ist somit herabgesetzt mit geringeren Energieverlusten im Gefolge. Bei Doppelspeisung ist die Steuerungseinheit 12 über zweckmäßige Steuerungs- und Kommunikationsleitungen mit beiden Umrichtern 2 des Antriebsbereichs 3ₙ sowie mit beiden Antriebsbereichsschaltern 4ₙ verbunden und unterbricht im Fehlerfall den Energiefluss durch die Umrichter für den jeweiligen Antriebsbereich beispielsweise 3ₙ. Hierzu bewirkt die Steuerungseinheit 12 wieder eine entsprechende Regelung der Umrichter. Anschließend kommt es zum Öffnen beider Antriebsbereichsschalter 4ₙ sowie sämtlicher Statorabschnittsschalter 8 und sämtlicher Sternpunktschalter 9. Zur Anzeige der Schaltstellung sind zwei Sammelanzeigeeinrichtungen 16 vorgesehen, wobei jede Sammelanzeigeeinrichtung 16 mit allen Statorabschnittsschaltern 8 und allen Sternpunktschaltern 9 verbunden ist. Jede Sammelanzeigeeinrichtung 16 ist jedoch lediglich mit einem Antriebsbereichsschalter 4ₙ gekoppelt. Bei einem abweichenden Ausführungsbeispiel ist nur eine Sammelanzeigeeinrichtung 16 vorgesehen, die mit allen Schaltern, also jedem Statorabschnittsschalter 8, jedem Sternpunktschalter 9 und jedem Antriebsbereichsschalter 4ₙ verbunden ist.

## Patentansprüche

1. Schutzvorrichtung zum sicheren Trennen eines Antriebsbereichs (3ₙ) einer Energieversorgung (2,3) eines spurgeführten Fahrzeugs, wobei der Antriebsbereich (3ₙ) über wenigstens einen Antriebsbereichsschalter (4ₙ) mit der Energieversorgung (2,3) verbindbar ist und in einer Kette aneinander gereihte Statorabschnitte (6ₘ) umfasst, die jeweils mittels eines Statorabschnittsschalters (8) mit einer Antriebsbereichsversorgungsleitung (5ₙ) verbindbar sind, und wobei die Schutzvorrichtung eine Steuerungseinheit (12) zum Öffnen wenigstens eines Schalters im Fehlerfall aufweist, wobei die Steuerungseinheit (12) zum Öffnen sämtlicher Statorabschnittsschalter (8) und des/der Antriebsbereichsschalter (4ₙ) im Fehlerfall eingerichtet ist,
**dadurch gekennzeichnet, dass**
die Schutzvorrichtung wenigstens eine Sammelanzeigeeinrichtung (16) aufweist, die mit jedem Statorabschnittsschalter (8) und/oder wenigstens einem der Antriebsbereichsschalter (4ₙ) sowie der Steuerungseinheit (12) verbunden und zum Anzeigen der Schaltstellung der Statorabschnittsschalter (8) und des/der Antriebsbereichsschalter (4ₙ) eingerichtet ist.

2. Schutzvorrichtung nach Anspruch 1,
**dadurch gekennzeichnet, dass**
jeder Statorabschnitt (6ₘ) eine mehrphasige Statorwicklung umfasst, die zu einem Sternpunkt (7) verschaltet ist.

3. Schutzvorrichtung nach einem der vorhergehenden Ansprüche, **gekennzeichnet durch**
Sternpunktschalter (9), die jeweils in Reihe zu einem Statorabschnittsschalter (9) geschaltet sind, wobei jeder Statorabschnitt (6ₘ) zwischen einem Sternpunktschalter (9) und einem Statorabschnittsschalter (8) angeordnet ist.

4. Schutzvorrichtung nach Anspruch 3,
**dadurch gekennzeichnet, dass**
die Steuerungseinheit (12) zum Öffnen der Sternpunktschalter (9) im Fehlerfall eingerichtet ist.

5. Vorrichtung (15) zum Antreiben eines spurgebundenen Fahrzeugs mit in einer Kette aneinander gereihten Antriebsbereichen (3ₙ), wobei jeder Antriebsbereich (3ₙ) über wenigstens einen Abschnittsbereichsschalter mit der Energieversorgung (2,3) koppelbar ist und in einer Kette aneinander gereihte Statorabschnitte (6ₘ) umfasst, die jeweils mittels eines Statorabschnittsschalters (8) mit einer Antriebsbereichsversorgungsleitung (4ₙ) verbindbar sind,
**gekennzeichnet durch**
eine Schutzvorrichtung gemäß einem der Ansprüche 1 bis 4.

6. Vorrichtung (15) nach Anspruch 5,
**dadurch gekennzeichnet, dass**
jeder Antriebsbereich (3ₙ) mittels eines Antriebsbereichsschalters (4ₙ) mit einem Energie einspeisenden Umrichter (2) verbindbar ist.

7. Vorrichtung nach Anspruch 6,
**dadurch gekennzeichnet, dass**
jeder Antriebsbereich (3ₙ) über einen weiteren Antriebsbereichsschalter (4ₙ) mit einem weiteren Umrichter (2) verbunden ist.

8. Verfahren zum Trennen eines Antriebsbereichs (3ₙ) eines spurgebundenen Fahrzeugs von einer durch wenigstens einen Umrichter (2) bereitgestellte Energieversorgung, bei dem eine Steuerungseinheit (12) anhand von Messwerten und einer in ihr implementierten Logik einen Fehlerfall erkennt, die Steuerungseinheit (12) anschließend in die Regelung der Umrichter (2) eingreift und die Energieversorgung durch jeden Umrichter (2) unterbricht, anschließend Statorabschnittsschalter (8), die jeweils einen von in einer Kette aneinander gereihten Statorabschnitten (6ₘ) mit einer Antriebsbereichsversorgungsleitung (5ₙ) verbinden, und jeden Antriebsbereichsschalter (4ₙ) öffnet, der die Antriebsbereichsversorgungsleitung (5ₙ) mit einem dem Antriebsbereichsschalter (4ₙ) zugeordneten Umrichter (2) verbindet, und bei dem eine Sammelanzeigeeinrichtung (16) die Schaltstellung der Statorabschnittsschalter (8) und der Antriebsbereichsschalter (4ₙ) an die Steuerungseinheit (12) übermittelt und der Steuerungseinheit (12) mitteilt, dass sich sämtliche Schalter (4ₙ, 8, 9) in einer Trennstellung befinden, wobei die Steuerungseinheit (12) bei geöffneten Statorabschnittsschaltern (8) und geöffneten Antriebsbereichsschaltern (4ₙ) die Energieerzeugung durch den oder die Umrichter (2) zulässt.

9. Verfahren nach Anspruch 8,
**dadurch gekennzeichnet, dass**
die Steuereinheit (1) nach Beseitigung des Fehlerfalls das Schließen der Antriebsbereichsschalter (4ₙ) und der Statorabschnittsschalter (8) ermöglicht.

## Claims

1. Protective apparatus for safe isolation of a drive area (3ₙ) of a power supply (2, 3) of a tracked vehicle, wherein the drive area (3ₙ) can be connected via at least one drive area switch (4ₙ) to the power supply (2, 3) and comprises stator sections (6ₘ) which are arranged one behind the other in a chain and can each be connected by means of a stator section switch (8) to a drive area supply line and wherein Protective apparatus has a control unit (12) for opening at least one switch in the event of a fault,
wherein
the control unit (12) is designed to open all the stator section switches (8) and the drive area switch or switches (4ₙ) in the event of a fault,
**characterized in that**
the protective apparatus has at least one common indication device (16), which is connected to each stator section switch (8) and/or to at least one of the drive area switches (4ₙ) as well as the control unit (12), and is designed to indicate the switch position of the stator section switches (8) and/or of the drive area switch or switches (4ₙ).

2. Protective apparatus according to Claim 1,
**characterized in that**
each stator section (6ₘ) comprises a polyphase stator winding which is connected to form a star point (7).

3. Protective apparatus according to one of the preceding claims,
**characterized by**
star-point switches (9) which are each connected in series with a stator section switch (8), wherein each stator section (6ₘ) is arranged between a star-point switch (9) and a stator section switch (8).

4. Protective apparatus according to Claim 3,
**characterized in that**
the control unit (12) is designed to open the star-point switches (9) in the event of a fault.

5. Apparatus (15) for driving a tracked vehicle having drive areas (3ₙ) which are arranged one behind the other in a chain, wherein each drive area (3ₙ) can be coupled via at least one section area switch to the power supply (2, 3) and comprises stator sections (6ₘ) which are arranged one behind the other in a chain and can each be connected by means of a stator section switch (8) to a drive area supply line (4ₙ),
**characterized by**
a protective apparatus according to one of Claims 1 to 4.

6. Apparatus (15) according to Claim 5,
**characterized in that**
each drive area (3ₙ) can be connected by means of a drive area switch (4ₙ) to a power-feeding converter (2).

7. Apparatus according to Claim 6,
**characterized in that**
each drive area (3ₙ) is connected via a further drive area switch (4ₙ) to a further converter (2).

8. Method for isolation of a drive area (3ₙ) of a tracked vehicle from a power supply which is provided by at least one converter (2), in which a control unit (12) identifies a fault situation on the basis of measured values and logic which is implemented in it, the control unit (12) then acts on the control of the converters (2) and interrupts the power supply through each converter (2), then opens stator section switches (8), which each connect one of the stator sections (6ₘ) which are arranged one behind the other in a chain to a drive area supply line (5ₙ), and opens each drive area switch (4ₙ), which connects the drive area supply line (5ₙ) to a converter (2) which is associated with the drive area switch (4ₙ), and in which a common indication device (16) transmits the switch position of the stator section switches (8) and of the drive area switches (4ₙ) to the control unit (12) and signals to the control unit (12) that all the switches (4ₙ, 8, 9) are in an isolating position, wherein the control unit (12) allows power to be produced by the converter or converters (2) when the stator section switches (8) are open and the drive area switches (4ₙ) are open.

9. Method according to Claim 8,
**characterized in that**,
once the fault situation has been rectified, the control unit (1) allows the drive area switches (4ₙ) and the stator section switches (8) to be closed.

## Revendications

1. Système de protection pour séparer, de manière sécurisée, une section (3ₙ) de commande d'une alimentation (2, 3) en énergie d'un véhicule guidé, la section (3ₙ) de commande pouvant, par au moins un interrupteur (4ₙ) de section de commande, être reliée à l'alimentation (2, 3) en énergie et comprenant des parties (6ₘ) de stator, qui sont montées les unes à côté des autres suivant une chaîne et qui peuvent chacune, au moyen d'un interrupteur (8) de partie de stator, être reliées à une ligne (5ₙ) d'alimentation de section de commande, et dans lequel le système de protection a une unité (12) de commande pour ouvrir au moins un interrupteur en cas de défaut,
dans lequel
l'unité (12) de commande est conçue pour ouvrir l'ensemble des interrupteurs (8) de partie de stator et du/des interrupteurs (4ₙ) de section de commande en cas de défaut, **caractérisé en ce que**
le système de protection a au moins un dispositif (16) d'affichage collectif, qui est relié à chaque interrupteur (8) de partie de stator et/ou à au moins l'un des interrupteurs (4ₙ) de section de commande, ainsi qu'à l'unité (12) de commande, et est conçu pour afficher la position de commutation de l'interrupteur (8) de partie de stator et du/des interrupteurs (4ₙ) de section de commande.

2. Système de protection suivant la revendication 1, **caractérisé en ce que**
chaque partie (6ₙ) de stator comprend un enroulement statorique polyphasé, qui est connecté à un point (7) neutre.

3. Système de protection suivant l'une des revendications précédentes, **caractérisé par** des interrupteurs (9) à point neutre, qui sont montés chacun en série avec un interrupteur (9) de partie de stator, dans lequel chaque partie (6ₙ) statorique est disposée entre un interrupteur (9) à point neutre et un interrupteur (8) de partie de stator.

4. Système de protection suivant la revendication 3, **caractérisé en ce que**
l'unité (12) de commande est conçue pour ouvrir l'interrupteur (9) à point neutre en cas de défaut.

5. Système (15) de commande d'un véhicule guidé, comprenant des sections (3ₙ) de commande, disposées l'une à côté de l'autre suivant une chaîne, chaque section (3ₙ) de commande pouvant, par au moins un interrupteur de section de commande, être reliée à l'alimentation (2, 3) en énergie et comprenant des parties (6ₘ) de stator, disposées les unes à côté des autres suivant une chaîne, qui peuvent être reliées chacune, au moyen d'un interrupteur (8) de parties de stator, à une ligne (4ₙ) d'alimentation de section de commande,
**caractérisé par**
un système de protection suivant l'une des revendications 1 à 4.

6. Système (15) suivant la revendication 5,
**caractérisé en ce que**
chaque section (3ₙ) de commande peut, au moyen d'un interrupteur (4ₙ) de section de commande, être reliée à un convertisseur (2) injectant de l'énergie.

7. Système suivant la revendication 6,
**caractérisé en ce que**
chaque section (3ₙ) de commande est reliée à un autre convertisseur (2) par un autre interrupteur (4ₙ) de section de commande.

8. Procédé pour séparer une section (3ₙ) de commande d'un véhicule guidé d'une alimentation en énergie mise à disposition par au moins un convertisseur (2), dans lequel une unité (12) de commande détecte un cas de défaut à l'aide de valeurs de mesure et d'une logique, qui y est mise en oeuvre, l'unité (12) de commande intervient ensuite dans la régulation du convertisseur (2) et interrompt l'alimentation en énergie par chaque convertisseur (2), ouvre ensuite des interrupteurs (8) de parties de stator, qui relient respectivement l'une de parties (6ₘ) de stator, disposées les unes à côté des autres suivant une chaîne, à une ligne (5ₙ) d'alimentation de section de commande et ouvre chaque interrupteur (4ₙ) de section de commande, qui relie la ligne (5ₙ) d'alimentation de section de commande à un convertisseur (2) associé à l'interrupteur (4ₙ) de section de commande, et dans lequel un dispositif (16) collectif d'affichage transmet la position de commutation des interrupteurs (8) de parties de stator et des interrupteurs (4ₙ) de section de commande à l'unité (12) de commande et l'unité (12) de commande fait part que l'ensemble des interrupteurs (4ₙ, 8, 9) se trouvent dans une position de séparation, l'unité (12) de commande autorisant, lorsque les interrupteurs (8) de parties de stator sont ouverts et lorsque les interrupteurs (4ₙ) de section de commande sont ouverts, la production d'énergie par le ou par les convertisseurs (2).

9. Procédé suivant la revendication 8,
**caractérisé en ce que** l'unité (1) de commande permet, après que le cas de défaut a été éliminé, la fermeture des interrupteurs (4ₙ) de sections de commande et des interrupteurs (8) de parties de stator.
